# EUROPÄISCHE PATENTANMELDUNG

(11) **EP 0 866 388 A1**
(43) Veröffentlichungstag der Anmeldung: **23.09.1998**
(21) Anmeldenummer: 98105177.4
(22) Anmeldetag: 23.03.1998
(51) Int. Cl.: G05B 1/00, G05D 23/13, G05D 7/06, G06F 3/02, G08C 21/00

(54) **Verfahren zum Einstellen eines Betriebszustandes eines Haushaltsgerätes anhand vorab ermittelter Referenzsignalmuster**

(30) Priorität: 22.03.1997 DE 19712137; 07.04.1997 DE 19714195
(71) Anmelder: AEG Hausgeräte GmbH, 90429 Nürnberg (DE)
(72) Erfinder: Leikam, Jürgen, 91161 Hipoltstein (DE)

(57) **Zusammenfassung**

Eine Bedienvorrichtung für ein Haushaltsgerät umfaßt eine Bedienblende (2) mit mehreren Berührflächen (27,28) an einer vorderen Oberfläche (4) und einer Anordnung von piezoelektrischen Sensoren (11 bis 14) an einer hinteren Oberfläche (3). Es werden von einem Mikroprozessor (7) aktuelle Signalmuster aller Sensorsignale (S1 bis S4) fortlaufend mit vorab durch eine Referenzmessung ermittelten und gespeicherten Referenzmustern für jede der Berührflächen verglichen, und bei einer Übereinstimmung der aktuellen Signalmuster mit einem der Referenzmuster wird derjenige Betriebszustand des Haushaltsgerätes eingestellt, der der zu diesem Referenzmuster gehörenden Berührfläche zugeordnet ist.

Vorteil: eine Bedienblende mit einer Standardsensoranordnung kann für unterschiedliche Blendendesigns verwendet werden

## Beschreibung

Die Erfindung betrifft ein Verfahren zum Einstellen eines Betriebszustandes eines Haushaltsgerätes, ein Haushaltsgerät und ein Verfahren zum Herstellen einer Vorrichtung zum Einstellen eines Betriebszustandes eines Haushaltsgerätes.

Unter einem Haushaltsgerät wird dabei und im folgenden ein Gerät zum automatisierten Verrichten von Tätigkeiten und Funktionen in einem privaten oder gewerblichen Haushalt verstanden. Beispiele für solche Haushaltsgeräte sind Haushaltsgargeräte zum Garen von Lebensmitteln wie Kochfelder (Kochmulden) oder Back- und Bratöfen, Waschmaschinen, Geschirrspüler und Kühl- und/oder Gefriergeräte zum Kühlen bzw. Gefrieren von Lebensmitteln, die im Fachjargon als 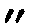 Weiße Ware" bezeichnet werden. Die Erfindung betrifft nicht sonstige elektrische oder elektronische Hausgeräte, die nicht in diesem Sinne Haushaltsgeräte sind, wie lediglich der Unterhaltung dienende Geräte (TV-Geräte, Musikwiedergabegeräte oder Spielgeräte), im Fachjargon als 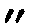 Braune Ware" bezeichnet, oder lediglich der Datenverarbeitung dienende Geräte (Computer).

Der Betriebszustand eines Gargerätes (Herdes) wie einer Kochmulde, eines Backofens oder eines kombinierten Herdes mit Kochmulde und Backofen wird im allgemeinen über eine an der Gerätevorderseite oder im Einbaumöbel angeordnete Bedienblende mit Schaltknebeln oder ein Bedienfeld mit kapazitiven Berührungssensoren ( 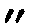 Touch-Sensoren", Tastsensoren) oder berührungslosen optischen oder Infrarot-Sensoren eingestellt.

In einem Prospekt der Firma Seppelfricke ist ein 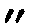 Selectronic-Einschaltpult SES 860" beschrieben mit mehreren Piezo-Tasten zum Einstellen von Betriebszuständen eines Einbaubackofens und eines Einbaukochfeldes und mit neben den Piezo-Tasten angeordneten Leuchtdiodenanzeigen für die mit den Piezo-Tasten eingestellten Funktionen oder Betriebszustände. Die Piezo-Tasten umfassen jeweils eine an einer durchsichtigen Glasblende gekennzeichnete Berührfläche und einen unmittelbar hinter der Berührfläche an der Glasblende befestigten piezoelektrischen Sensor. Wenn der zugehörige Sensor ein Sensorsignal liefert, wird ein der vor dem Sensor liegenden Berührfläche zugeordneter Betriebszustand des Einbaubackofens bzw. -kochfeldes eingestellt.

Diese elektronische Schalteinheit der Firma Seppelfricke hat ebenso wie alle anderen bekannten Berührungssensor-Bedienvorrichtungen für Haushaltsgeräte den Nachteil, daß für jede Anordnung von Berührflächen, sei es aus Gründen der erforderlichen Bedienfunktionen, des Designs oder der Ergonomie, an der Bedienblende jeweils eine darauf abgestimmte Sensoranordnung mit jeweils einem Sensor hinter jeder Berührfläche entwickelt, gefertigt und montiert werden muß.

Der Erfindung liegt deshalb die Aufgabe zugrunde, die genannten Nachteile beim Stand der Technik zu beseitigen.

Diese Aufgabe wird gemäß der Erfindung gelöst durch ein Verfahren mit den Merkmalen des Anspruchs 1, ein Haushaltsgerät mit den Merkmalen des Anspruchs 11 und ein Verfahren mit den Merkmalen des Anspruchs 22 oder 23.

Das Verfahren gemäß Anspruch 1 zum Einstellen eines Betriebszustandes eines Haushaltsgerätes durch Betätigen von einer oder gleichzeitig mehreren von einer Anzahl größer eins von an einer vorderen Oberfläche einer Bedienblende gekennzeichneten Berührflächen (Berührfelder, Betätigungsflächen) umfaßt die Verfahrensschritte:
a) Erzeugen von Sensorsignalen, die von einer Verformung der Bedienblende in jeweils einem von n (natürliche Zahl) Sensorbereichen der Bedienblende abhängen, mittels n Sensoren, die jeweils in einem der Sensorbereiche an der von der vorderen Oberfläche abgewandten hinteren Oberfläche der Bedienblende angeordnet sind,
b) fortlaufendes Überwachen (Erfassen) der n Sensorsignale aller Sensoren und Bestimmen eines aktuellen Signalmusters von jeweils wenigstens einem Merkmal aller n aktuellen Sensorsignale oder von unterschiedlichen Sensorsignalfunktionen der n aktuellen Sensorsignale,
c) Vergleichen von jedem aktuellen Signalmuster mit gespeicherten Referenzmustern, die aus den entsprechenden, vorab ermittelten Merkmalen der n Sensorsignale bzw. der entsprechenden Sensorsignalfunktionen bei Ausüben einer jeweils vorgegebenen Betätigung, d.h. einer Betätigung mit definierten Betätigungsparametern, insbesondere Betätigungskraft (oder Betätigungsdruck) und Betätigungsweg, von einer oder mehreren der Berührflächen bestehen,
d) Einstellen des der zu einem Referenzmuster, das mit dem aktuellen Signalmuster innerhalb eines vorgegebenen Toleranzbereichs übereinstimmt, gehörigen Berührfläche oder Menge von Berührflächen zugeordneten Betriebszustandes des Haushaltsgerätes.

Das Haushaltsgerät, insbesondere Haushaltsgargerät, gemäß Anspruch 11 umfaßt:
a) eine Bedienblende mit einer vorderen Oberfläche, an der wenigstens zwei Berührflächen zum Auswählen von Betriebszuständen des Haushaltsgerätes gekennzeichnet sind, und mit einer hinteren Oberfläche,
b) eine Anzahl n von Sensoren, die jeweils in einem Sensorbereich der Bedienblende an deren hinterer Oberfläche angeordnet sind und die jeweils ein von einer Verformung der Bedienblende in dem zugehörigen Sensorbereich abhängiges Sensorsignal erzeugen, und
c) eine mit einer Speichereinrichtung verbundene Steuereinrichtung, die
   c1) die n Sensorsignale aller Sensoren fortlaufend überwacht und ein aktuelles Signalmuster von jeweils wenigstens einem Merkmal aller n aktuellen Sensorsignale oder von unterschiedlichen Sensorsignalfunktionen der n aktuellen Sensorsignale bestimmt,
   c2) jedes aktuelle Signalmuster mit vorab ermittelten und in der Speichereinrichtung gespeicherten Referenzmustern vergleicht, wobei jedes Referenzmuster aus den entsprechenden Merkmalen der n Sensorsignale der Sensoren bzw. der entsprechenden Sensorslgnalfunktionen bei einer jeweils vorbestimmten Betätigung an einer oder mehreren der Berührflächen besteht, und die
   c3) bei einer Übereinstimmung des aktuellen Signalmusters mit einem der Referenzmuster innerhalb vorgegebener Toleranzgrenzen den der zu diesem Referenzmuster gehörigen Berührfläche oder Menge von Berührflächen zugeordnete Betriebszustand des Haushaltsgerätes einstellt.

Beim Herstellverfahren gemäß Anspruch 20 zum Herstellen einer Vorrichtung zum Einstellen eines Betriebszustandes eines Haushaltsgerätes wird zunächst eine Bedienblende bereitgestellt, an deren vorderer Oberfläche bereits mehrere (wenigstens zwei) Berührflächen gekennzeichnet sind, und es werden anschließend mehrere Sensoren in jeweils einem Sensorbereich an der hinteren Oberfläche der Bedienblende angeordnet, deren Sensorsignale von einer Verformung der Bedienblende in diesem Sensorbereich abhängen.

Beim Herstellverfahren gemäß Anspruch 21 zum Herstellen einer Vorrichtung zum Einstellen eines Betriebszustandes eines Haushaltsgerätes wird dagegen zunächst eine Bedienblende mit einer vorderen Oberfläche und mit einer von der vorderen Oberfläche abgewandten hinteren Oberfläche, an der mehrere Sensoren in jeweils einem Sensorbereich der Bedienblende angeordnet sind, die im Betrieb ein von der Verformung der Bedienblende in diesem Sensorbereich abhängiges Sensorsignal erzeugen, und es werden anschließend die wenigstens zwei Berührflächen an der vorderen Oberfläche der Bedienblende gekennzeichnet.

Beide Herstellverfahren gemäß den Ansprüchen 20 und 21 haben nun die folgenden Verfahrensschritte gemeinsam:
c) Bereitstellen einer Speichereinrichtung,
d) Durchführen eines Referenzmeßvorganges (Referenzmeßschrittes), bei dem
   d1) jede der Berührflächen und/oder mehrere Berührflächen zugleich wenigstens einmal mit einer Referenzbetätigung, insbesondere mit einem definierten Kraft-Weg-Verlauf, betätigt wird bzw. werden und die zugehörigen n Sensorsignale der Sensoren erfaßt werden,
   d2) jeweils wenigstens ein Merkmal jedes der n Sensorsignale der Sensoren oder einer oder mehrerer Sensorsignalfunktionen der Sensorsignale extrahiert (bestimmt) wird,
   d3) ein aus der Gesamtheit der bei der Referenzbetätigung ermittelten Merkmale gebildetes Signalmuster als der oder den bei der Referenzbetätigung betätigten Berührflächen zugeordnetes Referenzmuster in der Speichereinrichtung gespeichert wird.

Bei den beiden Herstellverfahren kann also jeweils eine vorgefertigte Bedienblende (Standardbedienblende) mit Berührflächen oder Sensoren für verschiedene Typen des Haushaltsgerätes verwendet werden. Die Sensoren bzw. Berührflächen können nämlich anschließend weitgehend frei an der Bedienblende angeordnet werden, da das Aufnehmen bzw. Verwenden der Referenzmuster eine nachträgliche Zuordnung von Sensoren zu Berührflächen ermöglicht.

Allen Lösungen der genannten Aufgabe gemäß der Erfindung sind die Idee und die zugehörigen Maßnahmen gemeinsam, ein für eine Betätigung von einer oder mehreren Berührflächen an der Bedienblende charakteristisches Signalmuster aus den Sensorsignalen mehrerer an der Bedienblende angeordneter Sensoren, die die Information über eine Verformung (eine mechanische Spannung und/oder eine Auslenkung) oder eine Verformungsänderung der Bedienblende in unterschiedlichen Sensorbereichen beinhalten, als Referenzmuster abzuleiten (zu erkennen) bzw. zu verwenden. Im Gegensatz dazu werden beim Stand der Technik nur die einzelnen Sensorsignale von unmittelbar hinter den Berührflächen angeordneten Sensoren jeweils für sich betrachtet.

Vorteilhafte Ausgestaltungen und Weiterbildungen des Verfahrens gemäß Anspruch 1, des Haushaltsgerätes gemäß Anspruch 11 und des Herstellverfahrens gemäß Anspruch 20 oder Anspruch 21 ergeben sich aus den von den genannten Ansprüchen jeweils abhängigen Ansprüchen.

Demnach werden die Referenzmuster vorzugsweise empirisch durch einen oder mehrere Referenzmeßvorgänge bestimmt. Alternativ können die Referenzmuster natürlich auch, insbesondere numerisch, anhand physikalischer Beziehungen berechnet werden, wenn die Material- und Sensoreigenschaften bestimmt wurden.

Als Merkmale der n Sensorsignale bzw. der Sensorsignalfunktionen werden in besonders vorteilhaften Ausführungsformen jeweils für sich oder in beliebiger Kombination erstens das betragsmäßige Überschreiten eines vorbestimmten Schwellwertes der Signalamplitude, zweitens die Maximalamplitude der n Sensorsignale bzw. der Sensorsignalfunktionen und drittens auch das Integral der Signalamplitude der n Sensorsignale bzw. der Sensorsignalfunktionen über einem vorgegebenen Zeitintervall verwendet. Es werden dann entsprechende Auswerteverfahren, vorzugsweise mithilfe von Software, vorgesehen.

Als Sensorsignalfunktionen werden vorzugsweise die Differenzen von jeweils zwei Sensorsignalen unterschiedlicher Sensoren verwendet. Dadurch können den Sensoren gemeinsame Driften, beispielsweise durch Temperaturänderungen, oder Signalgleichanteile (Offsets) in den Sensorsignalen eliminiert werden.

Eine bevorzugte Anwendung findet das Verfahren zum Einstellen eines Betriebszustandes wenigstens einer Kochstelle und/oder eines Back- und Bratofens.

In einer weiteren Ausführungsform wird der Betriebszustand nur eingestellt, wenn wenigstens eines der Sensorsignale innerhalb eines vorgegebenen Zeitintervalls (Betätigungszeitraums) sowohl die positive als auch die negative elektrische Polarität jeweils wenigstens einmal gezeigt hat. Dies entspricht einem Drücken und anschließenden Loslassen der Berührfläche. Ferner ist in einer alternativen Ausführungsform auch eine Einstellbedingung möglich, daß wenigstens eines der Sensorsignale innerhalb einer vorgegebenen Betätigungszeit nur eine Polarität aufweist. Hier muß die bedienende Person also die Berührfläche gedrückt halten. Beide Zusatzbedingungen stellen jeweils sicher, daß der Betriebszustand des Haushaltsgeräts nur eingestellt wird, wenn ein bewußtes Bedienen des Bedienfeldes durch die bedienende Person erfolgt ist, und schließen somit ein unbeabsichtigtes Auslösen eines Betriebszustandes beispielsweise durch Aufstellen eines Kochtopfes oder aufgrund thermischer Spannungen praktisch aus.

Zum Speichern der Referenzmuster und Extrahieren der Merkmale der Signalmuster der aktuellen Sensorsignale bzw. der aktuellen Sensorsignalfunktionen sowie Vergleichen der aktuellen Signalmuster mit den Referenzmustern werden vorzugsweise numerische Verfahren und Komponenten der Digitaltechnik verwendet.

In einer besonders vorteilhaften Ausführungsform werden zum Erfassen einer Druckänderung an den Berührfläche und damit einer durch die Bedienblende übertragenen Verformung in deren Sensorbereich piezoelektrische Sensoren als Sensoren verwendet. Diese Sensoren beruhen auf dem piezoelektrischen Effekt, aufgrund dessen insbesondere durch Materialverformungen (Deformationen) erzeugte mechanische Spannungen in einem Material in meßbare elektrische Spannungen umgewandelt werden. Ein solches Piezo-Bediensystem ist vergleichsweise unempfindlich gegenüber Verschmutzungen, da es nur auf mechanische Kräfte oder Drücke reagiert.

Um eine eindeutige Zuordnung von Referenzmustern zu Berührflächen zu erreichen, genügt prinzipiell ein Sensor. Jedoch wird mit einer größeren Zahl von Sensoren die Fehlertoleranz und damit die Zuverlässigkeit des Systems erhöht. Vorzugsweise wird deshalb die Anzahl n der Sensoren wenigstens so groß wie die Anzahl der Berührflächen gewählt.

Das Haushaltsgerät umfaßt in einer weiteren Ausführungsform wenigstens eine optische Anzeigeeinrichtung zum Anzeigen der mit einer oder mehreren Berührflächen auswählbaren Betriebszustände und/oder des aktuell eingestellten Betriebszustandes des Haushaltsgerätes.

Ein besonders großer Vorteil der Erfindung besteht darin, daß zumindest ein bis alle Sensorbereiche der Bedienblende außerhalb und seitlich versetzt zu den Berührflächen angeordnet sein können und dennoch eine Betätigung der Berührflächen eindeutig registriert werden kann. Diese Ausführungsform mit entlang der Oberflächen der Bedienblende relativ zu den Sensoren versetzten Berührflächen erlaubt nun zumindest hinter einem Teil der Berührflächen jeweils eine optische Anzeigeeinrichtung zum Kennzeichnen dieser Berührflächen anzuordnen. Dadurch kann die gewünschte Berührfläche ergonomisch leichter aufgefunden werden.

Die Anordnung der Sensoren an der Bedienblende kann insbesondere im wesentlichen zeilen- oder matrixförmig sein.

Zur weiteren Erläuterung der Erfindung wird auf die Zeichnungen Bezug genommen, in denen Ausführungsbeispiele gemäß der Erfindung jeweils schematisch veranschaulicht sind. Es zeigen:
- FIG 1: eine Bedienblende mit mehreren Berührflächen und Sensoren zum Einstellen eines Betriebszustandes eines Haushaltsgeräts in einer Vorderansicht,
- FIG 2: die Bedienblende gemäß FIG 1 in einer geschnittenen Seitenansicht,
- FIG 3: eine Vorrichtung zum Einstellen eines Betriebszustandes einer Funktionseinheit eines Haushaltsgerätes mit einer Bedienblende mit zwei Berührflächen und vier Sensoren,
- FIG 4: das Signalmuster der vier Sensoren bei Betätigen einer ersten der beiden Berührflächen gemäß FIG 3, FIG 5 das Signalmuster der vier Sensoren bei Betätigen der zweiten der beiden Berührflächen gemäß FIG 3,
- FIG 6: den zeitlichen Verlauf eines Sensorsignals während des Betätigens einer Berührfläche in einem Diagramm.
Einander entsprechende Teile sind in den FIG 1 bis 6 mit denselben Bezugszeichen versehen.

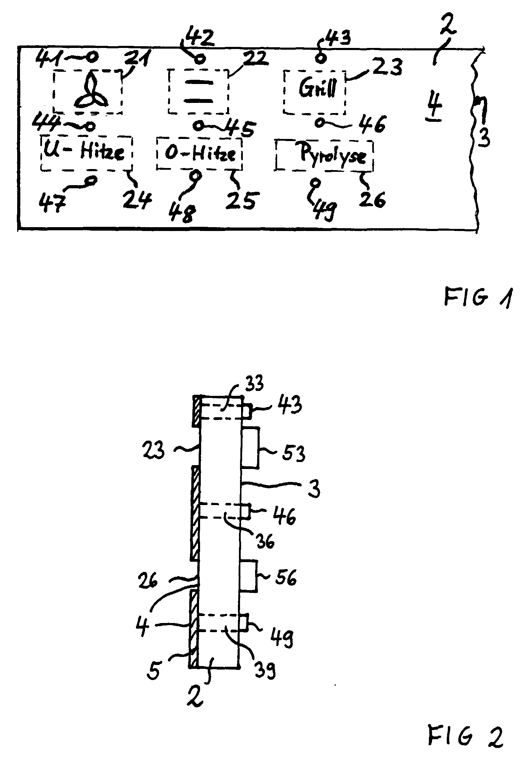

FIG 1 zeigt eine Ausführungsform einer vorzugsweise plattenförmigen Bedienblende 2 zum Einstellen einer Vielzahl von Betriebszuständen eines Back- und Bratofens als spezielles Haushaltsgerät mit sechs Berührflächen 21 bis 26 an einer vorderen Oberfläche (Vorderseite) 4. Die Berührflächen 21 bis 26 können, wie dargestellt, insbesondere matrixförmig angeordnet sein.

Jede Berührfläche 21 bis 26 ist mit einem Symbol oder einem Schriftzug gekennzeichnet, das bzw. der den mit dieser Berührfläche jeweils einstellbaren Betriebszustand bezeichnet, beispielsweise Umluft- oder Heißluftbetrieb bei Berührfläche 21, Ober- und Unterhitze bei Berührfläche 22 oder Pyrolyse (Pyrolytische Reinigung) bei Berührfläche 26. Vorzugsweise ist auch der Rand (die Kontur) der Berührfläche markiert, beispielsweise durch eine in FIG 2 dargestellte Bedruckung 5 oder sonstige vergleichbare Folie oder Schicht oder Platte, die optisch außerhalb der Berührflächen anders gestaltet ist.

Hinter jeder Berührfläche 21 bis 26 ist jeweils eine optische Anzeigeeinrichtung zum Anzeigen des oder der Betriebszustände, die an der Berührfläche 21 bis 26 eingestellt werden können, oder zur Anzeige des aktuell eingestellten Betriebszustandes des Haushaltsgerätes (Quittierung) oder zur Anzeige sowohl der wählbaren Betriebszustände als auch des aktuellen Betriebszustandes angeordnet, vorzugsweise an der hinteren Oberfläche 3 der Bedienblende 2. Die Bedienblende 2 besteht deshalb in dieser Ausführungsform zumindest hinter den Berührflächen 21 bis 26 aus einem optisch transparenten (lichtdurchlässigen) Material, beispielsweise Glas oder einem Kunststoff. Durch die optisch transparente Bedienblende 2 sind die Anzeigeeinrichtungen von vorne, d.h. mit Blick auf die vordere Oberfläche 4, sichtbar, und die Berührflächen 21 bis 26 können deshalb auch im Dunkeln oder bei schlechter Außenbeleuchtung leicht gefunden werden. Die Anzeigeeinrichtungen können in der Projektion die gesamten Berührflächen 21 bis 26 ausfüllen oder auch nur jeweils einen Teilbereich. In dem Schnitt gemäß FIG 2 sind zwei Anzeigeeinrichtungen 53 und 56 hinter den Berührflächen 23 bzw. 26 dargestellt. Als Anzeigeeinrichtungen können prinzipiell alle bekannten optischen Anzeigeeinrichtungen verwendet werden, mit der Symbole und/oder Buchstaben und/oder Wörter und/oder Zahlen und/oder Farbwechsel (z.B. bei Aktivierung oder Deaktivierung eines Betriebszustand) dargestellt werden können, vorzugsweise LEDs (Lichtemittierende Dioden) oder ein LCD (Flüssigkristallanzeige), insbesondere als Sieben-Segment-Anzeige. Dadurch können insbesondere mehrere verschiedene Betriebszustände gekennzeichnet werden.

An der hinteren Oberfläche 3 der Bedienblende 2 sind nun ferner mehrere piezoelektrische Sensoren 41 bis 49 angeordnet, vorzugsweise in einer matrixförmigen Anordnung. Die Sensoren 41 bis 49 sind vorzugsweise auf einer nicht dargestellten Leiterbahnfolie zu deren elektrischer Kontaktierung verklebt, die wiederum an die hintere Oberfläche 3 der Bedienblende 2 angeklebt ist. Jeder piezoelektrische Sensor 41 bis 49 ist somit mit einem zugeordneten Sensorbereich (33, 36 und 39 in FIG 2) der Bedienblende 2 fest (starr) verbunden, so daß Verformungen der Bedienblende 2 in deren Sensoorbereichen unmittelbar auf die Sensoren 41 bis 49 übertragen werden. Als Kleber kann ein im Endzustand starrer (rigider) Kleber verwendet werden, beispielsweise ein Epoxidharz-Kleber oder ein PUR-Kleber (Polyurethanharz-Kleber).

Jede Berührfläche 21, 22, 23, 24, 25 und 26 ist in der Projektion auf die hintere Oberfläche 3 der Bedienblende 2 von jeweils zwei piezoelektrischen Sensoren 41 und 44 bzw. 42 und 45 bzw. 43 und 46 bzw. 44 und 47 bzw. 45 und 48 bzw. 46 und 49 umgeben (eingerahmt). Die Sensoren 41 bis 49 und ihre Sensorbereiche sind somit seitlich versetzt zu den Berührflächen 21 bis 26 angeordnet. Die Sensoren 41 bis 49 erfassen dennoch eine Betätigung an den Berührflächen 27 und 28, weil sich die durch einen Druck an einer Berührfläche 27 oder 28 erzeugten mechanischen Spannungen in der Bedienblende 2 bis zu den Sensorbereichen fortsetzen.

Um nun aus den Sensorsignalen (elektrischen Spannungen) der Sensoren 41 bis 49 herauszufinden, ob und wenn ja welche Berührfläche oder welche Berührflächen betätigt (gedrückt) worden sind, werden die Sensorsignale der Sensoren 41 bis 49 gemäß der Erfindung einem speziellen Auswerteverfahren unterzogen. Es wird ein Signalmuster (Merkmalsvektor) aus vorgegebenen Merkmalen (charakteristischen Werten oder Eigenschaften) der neun aktuellen (gerade anstehenden) Sensorsignale der Sensoren 41 bis 49 gebildet (sog. Merkmalsextraktion). Dieses aktuelle Signalmuster wird mit vorab ermittelten und hinterlegten Referenzmustern (Referenzvektoren) verglichen, die jeweils einer Betätigung von einer der Berührflächen 21 bis 26 entsprechen. Wenn das aktuelle Signalmuster nicht um einen zu großen Grad von einem der Referenzmuster abweicht, wird die diesem Referenzmuster zugeordnete Berührfläche als betätigt erkannt. Der Grad der Abweichung bzw. der Toleranzbereich ergibt sich vorzugsweise aus einem vorgegebenen Ähnlichkeitsmaß (Vergleichsmetrik), wie in der Mustererkennung allgemein üblich.

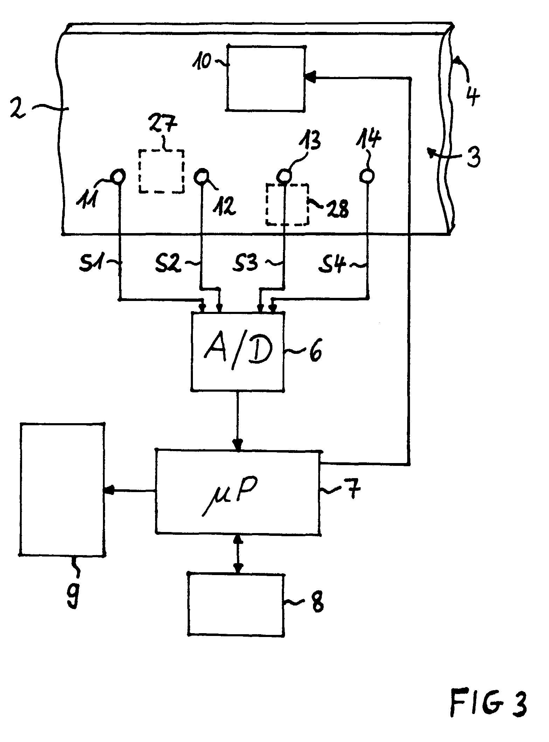

Dieses Erkennen einer Betätigung einer Berührfläche durch Auswerten von Signalmustern aller Sensorsignale wird anhand der FIG 3 bis 5 im folgenden noch näher erläutert.

Die FIG 3 zeigt eine Ausführungsform einer Vorrichtung zum Einstellen eines Betriebszustandes eines Haushaltsgerätes, insbesondere einer Funktionseinheit 9 eines Haushaltsgerätes, mit einer von hinten dargestellten Bedienblende 2. Die Funktionseinheit 9 kann beispielsweise eine Heizeinheit eines Haushaltsherdes, einer Haushaltskochmulde oder eines Haushaltskochfeldes, eine Geschirrspülmaschine oder einer Waschmaschine, ein Motor eines Gebläses eines Herdes oder ein Antriebsmotor einer Wasch- oder Geschirrspülmaschine oder auch ein Kompressor eines Kühlgerätes oder eines Gefriergerät sein. Unterschiedliche Betriebszustände können insbesondere die der Funktionseinheit 9 zugeführte Leistung und/oder Betriebsart sein, beispielsweise bei einem Kochfeld die Schaltzustände der einzelnen Kochzonen oder Kochplatten (Kochstellen) sowie deren Kochstufen. Die Bedienblende 2 kann unmittelbar am Haushaltsgerät bzw. dessen Funktionseinheit 9 oder auch räumlich entfernt (Fernbedienung) von diesem angeordnet sein.

Die Bedienblende 2 umfaßt gemäß FIG 3 vier, vorzugsweise linienförmig angeordnete, piezoelektrische Sensoren 11 bis 14 an ihrer hinteren Oberfläche 3 und zwei Berührflächen 27 und 28 an ihrer vorderen Oberfläche 4 sowie eine Anzeigeeinrichtung 10. Die Berührfläche 27 ist (in der Projektion) zwischen den beiden Sensoren 11 und 12 angeordnet, die Berührfläche 28 unterhalb des Sensors 13. Jeder Sensor 11, 12 13 und 14 erzeugt im Meßbetrieb ein Sensorsignal S1 bzw. S2 bzw. S3 bzw. S4.

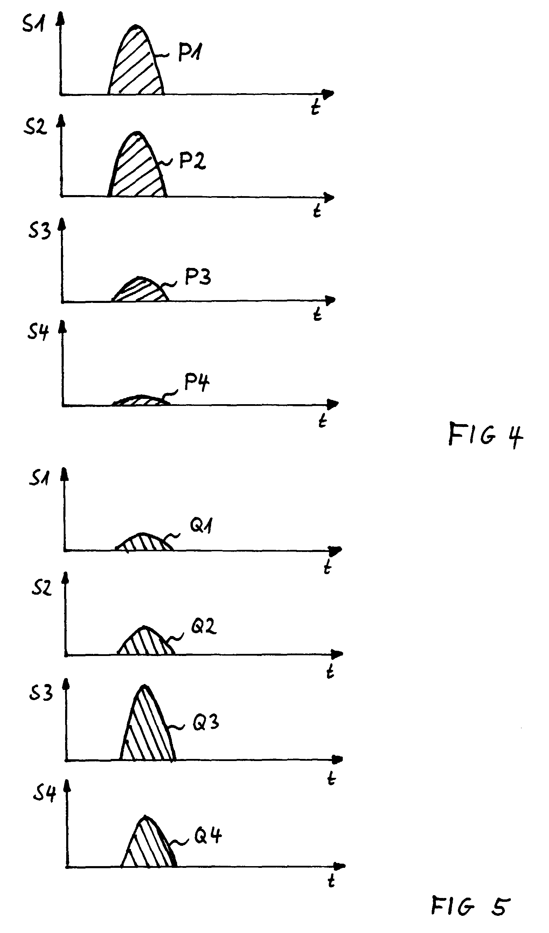

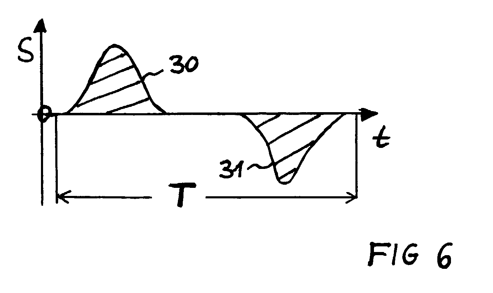

Die FIG 4 zeigt nun die vier Sensorsignale (elektrischen Spannungen) S1 bis S4 über der Zeit aufgetragen bei einer Betätigung der Berührfläche 27, während in FIG 5 die Sensorsignale S1 bis S4 bei einer entsprechenden Betätigung der Berührfläche 28 gezeigt sind. Die Sensorsignale S1 bis S4 zeigen jeweils Signalpeaks P1 bis P4 in FIG 4 bzw. Q1 bis Q4 in FIG 5, die gemeinsam in ihrer Form und Höhe ein für die bediente Berührfläche 27 bzw. 28 jeweils charakteristisches Signalmuster bilden. Es kann nun aus verschiedenen Merkmalen der Sensorsignale S1 bis S4 ein quantifizierbares Signalmuster bestimmt werden. Geeignete Merkmale sind insbesondere die Maximalamplitude der Sensorsignale S1 bis S4 (die Höhe der Peaks P1 bis P4 oder Q1 bis Q4) und/oder das Annehmen eines Mindestwertes (Schwellwertes) der Signalamplitude und/oder das zeitliche Integral der Sensorsignele S1 bis S4 über einem vorgegebenen Integrationszeitintervall, insbesondere also die schraffierten Flächen der Peaks P1 bis P4 bzw. Q1 bis Q4.

Zur Bestimmung dieser Merkmale werden die im allgemeinen analogen Sensorsignale S1 bis S4 mittels eines Analog/Digitalwandlers 6 digitalisiert und die entsprechenden digitalen Zeit- und Amplitudenwerte über eine Datenleitung einem Mikroprozessor als Steuereinrichtung 7 zugeführt. Die Steuereinrichtung 7 ermittelt nun die gewählten Merkmale der Sensorsignale S1 bis S4 gemäß einem für die Steuereinrichtung 7 vorgesehenen numerischen Algorithmus zur Maximumsbestimmung, Bestimmung einer Schwellwertsüberschreitung und/oder Zeitintegration der Sensorsignale. Die ermittelten Merkmale werden in einer mit der Steuereinrichtung 7 assoziierten Speichereinrichtung 8 zwischengespeichert und in einem anschließenden Vergleichsschritt mit ebenfalls in der Speichereinrichtung 8 fest gespeicherten Referenzmerkmalen von vorab ermittelten Referenzmustern verglichen.

Jedes Referenzmuster entspricht einer Betätigung von einer der beiden oder auch beiden Berührflächen 27 und 28. Die Referenzmuster werden in einem Referenzmeßschritt, vorzugsweise vorab im Rahmen der Fertigung der Bedienvorrichtung und des Haushaltsgerätes, bestimmt, indem zunächst die Berührfläche 27 und anschließend die Berührfläche 28 (oder umgekehrt) mit einer vorgegebenen - nicht dargestellten - Prüfsonde (Prüfstempel) mit einer vorgegebenen Referenzkraft (oder Referenzdruck) und entlang einem vorgegebenen Referenzweg (Durchbiegung) betätigt (gedrückt und gegebenenfalls wieder losgelassen) werden und aus den bei dieser Betätigung gemessenen Sensorsignalen S1 bis S4 gemäß den gleichen Kriterien wie bei den aktuellen Sensorsignalen im Bedienbetrieb Merkmale extrahiert und als Referenzmerkmale für ein Referenzmuster in der Speichereinrichtung 8 gespeichert werden. Vorzugsweise werden für jede Berührfläche 27 und 28 jeweils mehrere Referenzmessungen mit unterschiedlichen Betätigungen, die sich in ihrer Kraft-Weg-Beziehung unterscheiden, durchgeführt, um unterschiedlich starken Betätigungen durch Bediener im späteren Betrieb Rechnung zu tragen. Ferner können auch Bedienfunktionen, bei denen beide Berührflächen 27 und 28 gleichzeitig gedrückt werden müssen , beispielsweise bei einer Kindersicherung, dargestellt werden, indem beim Messen mit zwei Prüfsonden mit jeweils definierten Drücken zugleich auf beide Berührflächen gedrückt wird und die entsprechenden Sensorsignale S1 bis S4 aufgezeichnet und ausgewertet werden.

Die Speichereinrichtung 8 ist in allen Ausführungsformen vorzugsweise ein EPROM oder ein EEPROM. Zum Ermitteln der Referenzmuster wird in der Regel an der Produktionsstätte ein entsprechend konfigurierter Meßrechner verwendet werden mit einer entsprechenden Schreibeinrichtung zum Beschreiben der Speichereinrichtung 8. Alternativ kann aber auch die Steuereinrichtung 7 entsprechend ausgelegt werden. In diesem Fall ist auch ein Update am fertiggestellten Gerät beim Endkunden möglich.

Wenn nun eine bedienende Person die Bedienblende 2 beispielsweise mit einem Finger an der Berührfläche 27 drückt, so stellt sich ein Signalmuster aus den vier Sensorsignalen S1 bis S4 gemäß FIG 4 ein, das zumindest innerhalb gewisser Toleranzgrenzen gleich einem entsprechenden gespeicherten Referenzmuster ist. Die Steuereinrichtung 7 erkennt bei ihrem Vergleichsschritt aufgrund dieser Übereinstimmung, daß die Berührfläche 27 betätigt worden ist und steuert die Funktionseinheit 9 nun so an, daß der an der Berührfläche 27 ausgewählte Betriebszustand eingestellt wird. Ferner steuert die Steuereinrichtung 5 über ein Anzeigesignal die Anzeigeeinrichtung 10 derart an, daß die Anzeigeeinrichtung 8 den neu eingestellten Betriebszustand der Funktionseinheit 9 des Haushaltsgerätes an der Bedienblende 2 anzeigt.

In einer Weiterbildung können auch Sensorsignalfunktionen von jeweils wenigstens zwei der Sensorsignale S1 bis S4 der Sensoren 11 bis 14 gebildet werden, vorzugsweise Differenzsignale von jeweils zwei der vier Sensorsignale S1 bis S4. Dies hat den Vorteil, daß auf alle Sensoren 11 bis 14 gleichermaßen einwirkende Störeinflüsse wie beispielsweise eine Temperaturdrift durch die Differenzbildung eliminiert werden.

Um zu verhindern, daß nicht beabsichtigte Verformungen der Bedienfelder, beispielsweise durch Aufstellen von Kochgeschirr oder durch thermische Spannungen, zu einer Fehleinstellung eines Betriebszustands führen, kann eine besondere Auswertung der Sensorsignale vorgesehen werden, bei der nur bewußte und beabsichtigte Betätigungen der Bedienblende 2 berücksichtigt werden. Dazu wird der in FIG 6 dargestellte zeitliche Verlauf wenigstens eines Sensorsignals S eines piezoelektrischen Sensors berücksichtigt. Im Signalverlauf treten zwei Signalpulse 30 und 31 auf, die unterschiedliche elektrische Polarität aufweisen. Der erste Signalpuls 30 entspricht dem Drücken der Bedienblende 2 und der Signalpuls 31 mit der entgegengesetzten Polarität entspricht dem Loslassen der Bedienblende 2 durch die bedienende Person. Diese Signalform erklärt sich dadurch, daß die durch den Druck bzw. das Nachlassen des Druckes aufgebaute elektrische Spannung durch das Abfließen der entsprechend verschobenen Ladungen aus dem piezoelektrischen Material über die elektrischen Verbindungen schnell innerhalb von Bruchteilen einer Millisekunde wieder abgebaut wird. Bei einer Dauerbetätigung der Bedienblende 2 wird deshalb nach dem anfänglichen Signalpuls keine Meßspannung mehr registriert.

Die Steuereinrichtung 7 erzeugt nun in einer Ausführungsform nur dann ein Steuersignal zum Einstellen eines betriebszustandes, wenn beide Signalpulse 30 und 31 innerhalb eines vorgegebenen Zeitintervalls (maximale Betätigungszeit), das beispielsweise bei einigen Sekunden liegen kann, registriert werden.

In einer anderen Ausführungsform stellt die Steuereinrichtung 7 den Betriebszustand nur dann ein, wenn der erste Signalpuls 30 registriert wird und innerhalb eines vorgegebenen Zeitintervalls (minimale Haltezeit) kein zweiter Signalpuls 31 registriert wird, der/die Benutzer(in) die Bedienblende 2 also noch nicht losgelassen hat. Dazu enthält die Steuereinrichtung 7 vorzugsweise einen Zähler oder eine Zählfunktion, die bei Auftreten des ersten Signalpulses 30 anfängt hochzuzählen. Wenn das Zählergebnis einen bestimmten Wert erreicht, ohne daß ein zweiter Signalpuls 31 beobachtet worden ist, wird das Steuersignal ausgelöst.

Die piezoelektrischen Sensoren 41 bis 49 und 11 bis 14 umfasssen im allgemeinen Einkristalle, wie beispielsweise Quarzkristalle oder auch Lithiumtantalat-Kristalle, oder polykristalline keramische Körper, wie beispielsweise Bleizirkonat-Titanat (PZT), oder auch organische Polymere wie beispielsweise Polyvinylidendifluorid (PVDF). Anstelle von piezoelektrischen Sensoren können auch andere druckempfindliche Sensoren (Meßaufnehmer) verwendet werden, beispielsweise piezoresistive, induktive oder magnetostriktive Sensoren oder auch Membrandrucksensoren.

In einer weiteren Ausführungsform kann die Bedienblende 2 auch zumindest überwiegend aus Metall bestehen, beispielsweise Edelstahl oder Aluminium. Die hinter der Bedienblende 2 angeordneten Elektroniken, insbesondere in der Steuereinrichtung 5 werden dann gut gegen elektrostatische Entladungen vom Finger der bedienenden Person abgeschirmt (Schirmwirkung). Ferner wird auch die elektromagnetische Verträglichkeit (EMV) der Bedienvorrichtung erhöht.

Die anhand FIG 3 beschriebene Referenzmessung ermöglicht eine deutliche Reduzierung des Fertigungsaufwandes beim Herstellen von Haushaltsgerät-Bedienblenden mit mehreren Berührflächen und einer Sensoranordnung zum Detektieren von Betätigungen der Berührflächen. Es können nämlich nun einheitlich aufgebaute Standardbedienblenden mit der gleichen Sensoranordnung für eine Vielzahl unterschiedlicher Designs und Gerätetypen verwendet werden. Dazu wird die Standardbedienblende mit der Standardsensoranordnung mit einer für die vorgesehene Design- oder Gerätevariante geeigneten Bedruckung oder sonstigen Kennzeichnung der gewünschten Berührflächen (Tastenfelder) versehen, und anschließend werden für die Berührflächen durch eine bereits geschilderte Referenzmessung der Sensorsignale zugehörige Referenzmuster mit ausgewählten Merkmalen der Sensorsignale oder Funktionen von diesen ermittelt und in einer Speichereinrichtung gespeichert. Sodann wird eine Steuereinrichtung mit den Sensoren und der Speichereinrichtung verbunden und so ausgelegt, daß sie aus allen Sensorsignalen aktuelle Signalmuster nach den gleichen Kriterien (gleiche Merkmalsextraktionsverfahren) wie die Referenzmuster herleiten und mit den hinterlegten Referenzmustern fortlaufend vergleichen kann, beispielsweise durch Auslegen eines Mikroprozessors mit entsprechender Software. Für die Ermittlung und Speicherung der Referenzmuster kann ein eigener Rechner, insbesondere ein PC, oder auch die Steuereinrichtung verwendet werden. Falls die Steuereinrichtung selbst die Referenzmuster ermitteln und speichern kann, ist auch ein Update der Bedienblende beim Kunden durch einen Kundendienst noch möglich.

Das Bedienpanel wird somit direkt in der Fertigung konfiguriert und abgeglichen. Außerdem kann die gesamte Bedienblende außerhalb der Betätlgungsflächen frei definiert und gestaltet werden. Es ergibt sich somit ein einheitlicher Hardwareaufbau der Bedienblende und der Elektronik (Mikroprozessor, Speicher).

Eine Anpassung von zunächst unabhängig vorgegebenen Berührflächen einerseits und Sensoren andererseits über die Mustererkennung gemäß der Erfindung ist natürlich auch umgekehrt möglich, wenn zunächst die Berührflächen gekennzeichnet werden und anschließend erst die Sensoren an die Bedienblende angebracht werden.

## Patentansprüche

1. Verfahren zum Einstellen eines Betriebszustandes eines Haushaltsgerätes (9) durch Betätigen von einer oder gleichzeitig mehreren von insgesamt wenigstens zwei an einer vorderen Oberfläche (4) einer Bedienblende (2) gekennzeichneten Berührflächen (21 bis 28), bei dem
a) eine Anzahl n von jeweils in einem Sensorbereich (33, 36,39) der Bedienblende an deren von der vorderen Oberfläche abgewandten hinteren Oberfläche (3) angeordnet Sensoren (11 bis 14, 41 bis 49) jeweils ein von einer Verformung der Bedienblende in dem zugehörigen Sensorbereich abhängiges Sensorsignal (S1 bis S4) erzeugen,
b) die n Sensorsignale (S1 bis S4) aller Sensoren (11 bis 14) fortlaufend überwacht werden und ein aktuelles Signalmuster von jeweils wenigstens einem Merkmal aller n aktuellen Sensorsignale oder von unterschiedlichen Sensorsignalfunktionen der n aktuellen Sensorsignale bestimmt wird,
c) jedes aktuelle Signalmuster mit vorab ermittelten und gespeicherten Referenzmustern verglichen wird, wobei jedes Referenzmuster aus den entsprechenden Merkmalen der n Sensorsignale der Sensoren bzw. der entsprechenden Sensorsignalfunktionen bei einer jeweils vorbestimmten Betätigung an einer oder mehreren der Berührflächen (20) besteht,
d) bei einer Übereinstimmung des aktuellen Signalmusters mit einem der Referenzmuster innerhalb vorgegebener Toleranzgrenzen der der zu diesem Referenzmuster gehörigen Berührfläche oder Menge von Berührflächen zugeordnete Betriebszustand des Haushaltsgerätes eingestellt wird.

2. Verfahren nach Anspruch 1, bei dem die Referenzmuster durch eine oder mehrere Referenzmessungen bestimmt sind.

3. Verfahren nach Anspruch 1 oder Anspruch 2, bei dem als Merkmal der n Sensorsignale bzw. der Sensorsignalfunktionen das Überschreiten eines vorbestimmten Schwellwertes der Signalamplitude herangezogen wird.

4. Verfahren nach einem der vorhergehenden Ansprüche, bei dem als Merkmal der n Sensorsignale bzw. der Sensorsignalfunktionen deren Maximalamplitude herangezogen wird.

5. Verfahren nach einem der vorhergehenden Ansprüche, bei dem als Merkmal der n Sensorsignale bzw. der Sensorsignalfunktionen das Integral von deren Signalamplitude über einem vorgegebenen Zeitintervall herangezogen wird.

6. Verfahren nach einem der vorhergehenden Ansprüche, bei dem als Sensorsignalfunktionen die Differenzen von jeweils zwei Sensorsignalen unterschiedlicher Sensoren verwendet werden.

7. Verfahren nach einem der vorhergehenden Ansprüche, bei dem der Betriebszustand des Haushaltsgerätes nur eingestellt wird, wenn wenigstens eines der n aktuellen Sensorsignale innerhalb eines vorgegebenen Betätigungszeitintervalls beide elektrischen Polaritäten jeweils wenigstens einmal angenommen hat.

8. Verfahren nach einem der Ansprüche 1 bis 6, bei dem der Betriebszustand des Haushaltsgerätes nur eingestellt wird, wenn wenigstens eines der n aktuellen Sensorsignale innerhalb eines vorgegebenen Betätigungszeitintervalls nur eine Polarität angenommen hat.

9. Verfahren nach einem der vorhergehenden Ansprüche, bei dem die Merkmale der Referenzmuster in digitaler Form gespeichert sind und die aktuellen Sensorsignale bzw. die aktuellen Sensorsignalfunktionen zum Ermitteln ihrer Merkmale fortlaufend digitalisiert werden.

10. Verfahren nach einem der vorhergehenden Ansprüche, bei dem der Betriebszustand wenigstens einer Kochstelle und/oder eines Back- und Bratofens eingestellt wird.

11. Haushaltsgerät, insbesondere Haushaltsgargerät, umfassend
a) eine Bedienblende (2) mit einer vorderen Oberfläche (4), an der wenigstens zwei Berührflächen (21 bis 28) zum Auswählen von Betriebszuständen des Haushaltsgerätes gekennzeichnet sind, und mit einer hinteren Oberfläche (3),
b) eine Anzahl n von Sensoren (11 bis 14, 41 bis 49), die jeweils in einem Sensorbereich (33,36,39) der Bedienblende an deren hinterer Oberfläche angeordnet sind und die jeweils ein von einer Verformung der Bedienblende in dem zugehörigen Sensorbereich abhängiges Sensorsignal (S1 bis S4) erzeugen, und
c) eine Steuereinrichtung (7), die
c1) die n Sensorsignale (S1 bis S4) aller Sensoren (11 bis 14) fortlaufend überwacht und ein aktuelles Signalmuster von jeweils wenigstens einem Merkmal aller n aktuellen Sensorsignale oder von unterschiedlichen Sensorsignalfunktionen der n aktuellen Sensorsignale bestimmt,
c2) jedes aktuelle Signalmuster mit vorab ermittelten und in einer Speichereinrichtung (8) gespeicherten Referenzmustern vergleicht, wobei jedes Referenzmuster aus den entsprechenden Merkmalen der n Sensorsignale der Sensoren bzw. der entsprechenden Sensorsignalfunktionen bei einer jeweils vorbestimmten Betätigung an einer oder mehreren der Berührflächen (20) besteht, und die
c3) bei einer Übereinstimmung des aktuellen Signalmusters mit einem der Referenzmuster innerhalb vorgegebener Toleranzgrenzen den der zu diesem Referenzmuster gehörigen Berührfläche oder Menge von Berührflächen zugeordnete Betriebszustand des Haushaltsgerätes einstellt.

12. Haushaltsgerät nach Anspruch 11, bei dem die Anzahl n der Sensoren wenigstens so groß ist wie die Anzahl der Berührflächen.

13. Haushaltsgerät nach Anspruch 11 oder Anspruch 12, bei der die Steuereinrichtung (7) als Sensorsignalfunktionen Differenzen von jeweils unterschiedlichen Paaren der n aktuellen Sensorsignale bildet.

14. Haushaltsgerät nach einem der Ansprüche 11 bis 13, bei dem die Referenzmuster in der Speichereinrichtung in digitaler Form in einer Wertetabelle gespeichert sind, in der jedem Referenzmuster eine Berührfläche oder eine Menge von Berührflächen zugeordnet ist, und bei dem die Steuereinrichtung wenigstens einen Mikroprozessor umfaßt.

15. Haushaltsgerät nach einem der Ansprüche 11 bis 14 mit wenigstens einer optische Anzeigeeinrichtung (8) zum Anzeigen der mit einer oder mehreren Berührflächen auswählbaren Betriebszustände und/oder des aktuell eingestellten Betriebszustandes des Haushaltsgerätes.

16. Haushaltsgerät nach Anspruch 15, bei dem an der Bedienblende zumindest hinter einem Teil der Berührflächen (23,26) jeweils eine Anzeigeeinrichtung (53,56) zum Kennzeichnen dieser Berührflächen angeordnet ist.

17. Haushaltsgerät nach einem der Ansprüche 11 bis 16, bei dem zumindest ein Sensorbereich der Bedienblende außerhalb und seitlich versetzt zu den Berührflächen angeordnet ist.

18. Haushaltsgerät nach einem der Ansprüche 11 bis 17, bei dem wenigstens ein Teil der Sensoren piezoelektrische Sensoren sind.

19. Haushaltsgerät nach einem der Ansprüche 11 bis 18, bei der die Sensoren an der Bedienblende im wesentlichen zeilen- oder matrixförmig angeordnet sind.

20. Verfahren zum Herstellen einer Vorrichtung zum Einstellen eines Betriebszustandes eines Haushaltsgerätes mit den folgenden Verfahrensschritten:
a) Bereitstellen einer Bedienblende (2) mit einer vorderen Oberfläche (4), an der wenigstens zwei Berührflächen (20) gekennzeichnet sind, und mit einer von der vorderen Oberfläche abgewandten hinteren Oberfläche (3),
b) Anordnen von mehreren druckempfindlichen Sensoren in jeweils einem Sensorbereich an der hinteren Oberfläche der Bedienblende,
c) Bereitstellen einer Speichereinrichtung,
d) Durchführen eines Referenzmeßvorganges, bei dem
d1) jede der Berührflächen und/oder mehrere Berührflächen zugleich wenigstens einmal mit einer Referenzbetätigung beaufschlagt wird bzw. werden und die zugehörigen n Sensorsignale der Sensoren aufgenommen werden,
d2) jeweils wenigstens ein Merkmal jedes der n Sensorsignale der Sensoren oder einer oder mehrerer Sensorsignalfunktionen der Sensorsignale extrahiert wird,
d3) ein aus der Gesamtheit der bei der Referenzbetätigung ermittelten Merkmale gebildetes Signalmuster als der oder den bei der Referenzbetätigung betätigten Berührflächen zugeordnetes Referenzmuster in der Speichereinrichtung gespeichert wird.

21. Verfahren zum Herstellen einer Vorrichtung zum Einstellen eines Betriebszustandes eines Haushaltsgerätes mit den folgenden Verfahrensschritten:
a) Bereitstellen einer Bedienblende mit einer vorderen Oberfläche und mit einer von der vorderen Oberfläche abgewandten hinteren Oberfläche, an der mehrere druckempfindliche Sensoren in jeweils einem Sensorbereich der Bedienblende angeordnet sind,
b) Kennzeichnen von jeweils wenigstens zwei Berührflächen an der vorderen Oberfläche der Bedienblende,
c) Bereitstellen einer Speichereinrichtung,
d) Durchführen eines Referenzmeßvorganges, bei dem
d1) jede der Berührflächen und/oder mehrere Berührflächen zugleich wenigstens einmal mit einer Referenzbetätigung beaufschlagt wird bzw. werden und die zugehörigen n Sensorsignale der Sensoren aufgenommen werden,
d2) jeweils wenigstens ein Merkmal jedes der n Sensorsigna-, le der Sensoren oder einer oder mehrerer Sensorsignalfunktionen der Sensorsignale extrahiert wird,
d3) ein aus der Gesamtheit der bei der Referenzbetätigung ermittelten Merkmale gebildetes Signalmuster als der oder den bei der Referenzbetätigung betätigten Berührflächen zugeordnetes Referenzmuster in der Speichereinrichtung gespeichert wird.
